# EUROPÄISCHE PATENTSCHRIFT

(11) **EP 2 785 442 B1**
(45) Veröffentlichungstag und Bekanntmachung des Hinweises auf die Patenterteilung: **21.10.2015**
(21) Anmeldenummer: 13742160.8
(22) Anmeldetag: 25.07.2013
(51) Int. Cl.: B01D 69/00, H01M 8/18

(54) **REDOX-FLOW-ZELLE MIT HOCHMOLEKULAREN VERBINDUNGEN ALS REDOXPAAR UND!SEMIPERMEABLER MEMBRAN ZUR SPEICHERUNG ELEKTRISCHER ENERGIE**
REDOX FLOW CELL COMPRISING HIGH MOLECULAR WEIGHT COMPOUNDS AS REDOX PAIR AND SEMIPERMEABLE MEMBRANE FOR STORAGE OF ELECTRICAL ENERGY
PILE À FLUX REDOX COMPRENANT DES COMPOSÉS MACROMOLÉCULAIRES COMME COUPLE REDOX ET UNE MEMBRANE SEMIPERMÉABLE POUR LE STOCKAGE D'ÉNERGIE ÉLECTRIQUE

(30) Priorität: 14.08.2012 DE 102012016317
(43) Veröffentlichungstag der Anmeldung: 08.10.2014
(73) Patentinhaber: Jenabatteries GmbH, 07743 Jena (DE)
(72) Erfinder: SCHUBERT, Ulrich, Sigmar, 07743 Jena (DE); HAGER, Martin, 07743 Jena (DE); JANOSCHKA, Tobias, 07743 Jena (DE)
(74) Vertreter: Ackermann, Joachim
(86) Internationale Anmeldenummer: PCT/EP2013/002206
(87) Internationale Veröffentlichungsnummer: WO 2014/026728

(56) Entgegenhaltungen:
- WO-A1-2012/075810
- JP-B2- 3 729 296
- US-A1- 2007 269 710
- US-A1- 2012 171 541
- US-B1- 8 080 327

## Beschreibung

Die Erfindung betrifft eine Redox-Flow-Zelle, im allgemeinen Sprachgebrauch auch als Redox-Flow-Batterie oder als Redox-Fluss-Batterie bezeichnet, zur Speicherung elektrischer Energie. Die Redox-Flow-Zelle enthält zwei polaritätsspezifische Kammern, in denen jeweils eine redoxaktive chemische Verbindung bzw. eine redoxaktive Verbindung in beiden Kammern in gelöster Form vorliegt und mit einem Flüssigkeitsspeicher in Verbindung steht. Auf diese Weise werden zwei unabhängige Kreisläufe für die beispielsweise in Wasser oder organischem Lösungsmittel gelösten redoxaktiven Verbindungen gebildet, welche durch eine Membran zwischen den polaritätsspezifischen Kammern getrennt sind. Über diese Membran erfolgt ein Ionenaustausch zwischen den beiden Kammern.

Die Zellen eigenen sich besonders für stationäre Speicheranwendungen, zum Beispiel als Pufferbatterie für Windkraftanlagen beziehungsweise als Leistungs- und Regelreserven zum Lastausgleich in Stromnetzen, aber auch als mobiler Energiespeicher, zum Beispiel für den Betrieb von Elektroautos und elektronischen Geräten.

Bestehende Redox-Flow-Batterien (RFB) sind elektrochemische Energiespeicher. Die zur Potentialeinstellung an den Elektroden nötigen Verbindungen sind gelöste, redoxaktive Spezies, die beim Lade- bzw. Entladevorgang in einem elektrochemischen Reaktor in ihre jeweils andere Redoxstufe überführt werden. Dazu werden die Elektrolytlösungen (Katholyt, Anolyt) aus einem Tank entnommen und aktiv an die Elektroden gepumpt. Anoden- und Kathodenraum sind im Reaktor durch eine ionenselektive Membran getrennt, welche meist eine hohe Selektivität für Protonen zeigt. Solange Elektrolytlösung gepumpt wird, kann Strom entnommen werden. Der Ladevorgang ist dann einfach die Umkehrung des Vorganges. Damit ist die Energiemenge, die in einer RFB gespeichert werden kann, direkt proportional zur Größe der Vorratstanks. Die entnehmbare Leistung dagegen ist eine Funktion der Größe des elektrochemischen Reaktors.

RFB haben eine komplexe Systemtechnik (BoP - Balance of Plant), die in etwa der einer Brennstoffzelle entspricht. Übliche Baugrößen der Einzel-Reaktoren bewegen sich im Bereich von circa 2 bis 50 kW. Die Reaktoren können sehr einfach modular kombiniert werden, ebenso kann die Tankgröße nahezu beliebig angepasst werden. Eine besondere Bedeutung kommt hierbei RFBs zu, welche mit Vanadiumverbindungen als Redoxpaar auf beiden Seiten arbeiten (VRFB). Dieses System wurde 1986 erstmals beschrieben (AU 575247 B) und stellt momentan den technischen Standard dar. Weitere anorganische, niedermolekulare Redoxpaare wurden untersucht, unter anderem auf Basis von Cer (B. Fang, S. Iwasa, Y. Wei, T. Arai, M. Kumagai: "A study of the Ce(III)/Ce(IV) redox couple for redox flow battery application", Electrochimica Acta 47, 2002, 3971-3976), Ruthenium (M. H. Chakrabarti, E. Pelham, L. Roberts, C. Bae, M. Saleem: "Ruthenium based redox flow battery for solar energy storage", Energy Conv. Manag. 52, 2011, 2501-2508], Chrom (C-H. Bae, E. P. L. Roberts, R. A. W. Dryfe: "Chromium redox couples for application to redox flow batteries", Electrochimica Acta 48, 2002, 279-87), Uran (T. Yamamura, Y. Shiokawa, H. Yamana, H. Moriyama: "Electrochemical investigation of uranium β-diketonates for all-uranium redox flow battery", Electrochimica Acta 48, 2002, 43-50), Mangan (F. Xue, Y. Wang, W. Hong Wang, X. Wang: "Investigation on the electrode process of the Mn(II)/Mn(LII) couple in redox flow battery", Electrochimica Acta 53, 2008, 6636-6642) und Eisen (Y. Xu, Y. Wen, J. Cheng, G. Cao, Y. Yang: "A study of iron in aqueous solutions for redox flow battery application", Electrochimica Acta 55, 2010, 715-720). Allerdings basieren diese Systeme auf metallhaltigen Elektrolyten, welche giftig bzw. umweltschädlich sind.

VRFB-Reaktoren sind derzeit in Blöcken von 1 bis 20 kW erhältlich. Durch modulare Zusammenschaltung werden höhere Leistungen erzielt. Jeder einzelne Block enthält mehrere planare Zellen, die zur Erzielung einer höheren Spannung in Reihe geschaltet sind. Diese so genannte Bipolarbauweise entspricht weitgehend der Bauweise einer PEM-Brennstoffzelle. Als Membran wird ein perfluoriertes Polymer mit Sulfonsäuregruppen genutzt, zumeist DuPont Nafion® 117. Andere Polymere wurden beschrieben, wie beispielsweise auf Basis von SPEEK (Q. Luo, H. Zhang, J. Chen, D. You, C. Sun, Y. Zhang: "Nafion/SPEEK composite: Preparation and characterization of Nafion/SPEEK layered composite membrane and its application in vanadium redox flow battery", J. Memb. Sci. 325, 2008, 553-558), PVDF (J. Qiu, J. Zhang, J. Chen, J. Peng, L. Xu, M. Zhai, J. Li, G. Wei: "Amphoteric ion exchange membrane synthesized by radiation-induced graft copolymerization of styrene and dimethylaminoethyl methacrylate into PVDF film for vanadium redox flow battery applications", J. Memb. Sci. 334, 2009, 9-15), QPPEK (S. Zhang, C. Yin, D. Xing, D. Yang, X. Jian: "Preparation of chloromethylated/ quaternized poly(phthalazinone ether ketone) anion exchange membrane materials for vanadium redox flow battery applications", J. Memb. Sci. 363, 2010, 243-249), fluorfreien sulfonierten Polyarylen (D. Chen, S. Wang, M. Xiao, Y. Meng: "Synthesis and properties of novel sulfonated poly(arylene ether sulfone) ionomers for vanadium redox flow battery", Energy Conv. Manag. 51, 2010, 2816-2824) oder anorganisch-organische Komposit-Materialien mit SiO₂ (J. Xi, Z. Wu, X. Qiu, L. Chen: "Nafion/SiO2 hybrid membrane for vanadium redox flow battery", J. Pow. Sour. 166, 2007, 531-536), sind aber im Gegensatz zu Nafionmembranen noch nicht praxistauglich und kommerziell verfügbar. Das gleiche gilt auch für Nanofiltrations-Membranen, welche die Protonen des sauren Elektrolyten passieren lassen und die Vanadiumsalze zurückhalten (Hongzhang Zhang, Huamin Zhang, Xianfeng Li, Zhensheng Mai, Jianlu Zhang: "Nanofiltration (NF) membranes: the next generation separators for all vanadium redox flow batteries (VRBs)", Energy & Environmental Science, 2011, 4, 1676-1679). Dessen ungeachtet würden auch hier dieselben Nachteile, wie hoher Aufwand und Umweltbelastung in Havariefall sowie geringe Lebensdauer der Zelle, gelten.

Beim derzeitigen Stand der Technik limitiert der Einsatz von ionenleitenden Membranen die weitere Kommerzialisierung, da Standard-Nafion®-Membranen teuer, fluorhaltig, mechanisch nicht stabil sind; weiterhin quellen diese sehr stark und sind anfällig für einen elektrochemischen Kurzschluss durch Eindiffusion von Vanadium-Ionen.

Rein organische Redoxverbindungen wurden bisher kaum in RFBs eingesetzt. So wurde niedermolekulares 2,2,6,6-Tetramethylpiperidinyloxyl (TEMPO) und *N*-Methylphthalimid in einer RFB mit einer ionenleitenden Membran eingesetzt (Z. Li, S. Li, S. Q. Liu, K. L. Huang, D. Fang, F. C. Wang, S. Peng: "Electrochemical properties of an all-organic redox flow battery using 2,2,6,6-tetramethyl-1-piperidinyloxy and N-methylphthalimide", Electrochem. Solid State Lett. 14, 2011, A171-A173). Weiterhin scheidet Rubren aufgrund der hohen Kosten und sehr geringen Löslichkeit, trotz guter elektrochemischer Eigenschaften, aus (vergl. H. Charkrabarthi, R. A. W. Dryfe, E. P. L. Roberts, Jour. Chem. Soc. Pak. 2007, 29, 294-300 "Organic Electrolytes for Redox Flow Hatteries").

Auch auf 2,3,6-Trimethylquinoxalin basierte Batterien nutzen teure ionenselektive Nafion^{®}-Membranen (F. R. Brushett, J. T. Vaughey, A. N. Jansen: "An All-Organic Non-aqueous Lithium-Ion Redox Flow Battery", Adv. Energy Mater. 2012, 2, 1390-1396).

Pyrazin-basierte Cyanoazacarbone (US 8,080,327 B1) wurden sowohl als Anolyt und als Katholyt eingesetzt, wobei die Elektrodenräume trennende ionenleitende Membranen auf Basis von Kationenaustauschern und Anionenaustauschern zum Einsatz kommen. Diese Membranen sind teuer und jeweils nur für eine bestimmte Klasse von Ionen durchlässig. Dies zeigt sich insbesondere in einem nachteiligen Systemaufbau, der zwischen dem Anolyt- und Katholytkreislauf noch ein Elektroyltreservoir nutzen muss. Dieses ist nötig, um den Ladungsausgleich/Vermischen der Anionen, welche über die Anionenaustauscher-Membran in das Reservoir diffundieren, und der Kationen, welche über die Kationenaustauscher-Membran in das Reservoir diffundieren, zu gewährleisten.

Neben den organischen Redoxverbindungen sind niedermolekulare metallorganische Verbindungen beschrieben (M.H. Chakrabartia, R.A.W. Dryfe, E.P.L. Roberts: "Evaluation of electrolytes for redox flow battery applications", Electrochimica Acta, 52, 2007, 2189-2195). Hierbei kommen organische Liganden zum Einsatz, die anorganische Metallsalze komplexieren. Solche Liganden sind zum Beispiel Dipyridyl, Terpyridyl, Phenantrolin, oder Imidazole (US 2012/0171541 A1). Auch für diese Systeme müssen teure ionenleitende Membranen, wie Nafion^{®} oder amin-funktionalisierte Polystyrol-derivate eingesetzt werden. Das gleiche gilt für Redox-Flow-Batterien auf Basis von niedermolekularem Ruthenium-Bipyridin-komplexen, welche zum Beispiel die Anionenaustauschermembranen Neocepta^{®} nutzen. Andere Membranen hingegen sind für diese Komplexe durchlässig und führen einen geringen Wirkungsgrad der Batterie herbei (Y. Matsuda, K. Tanaka, M. Okada, Y. Takasu, M. Morita, T. Matsumura-Inoue: "A rechargeable redox battery utilizing ruthenium complexes with non-aqueous organic electrolyte", J. Applied Electrochem. 18, 1988, 909-914).

Der Erfindung liegt die Aufgabe zugrunde, durch die Verwendung neuer Materialien und Membranen möglichst aufwandgering eine kostengünstige und langlebige Redox-Flow-Zelle zu schaffen, welche auch im eventuellen Havariefall mit ihren redoxaktiven Verbindungen wenig umweltbelastend wirkt.

Diese Aufgabe wird durch eine Redox-Flow-Zelle zur Energiespeicherung, enthaltend eine Reaktionszelle mit zwei polaritätsspezifischen Kammern (1, 2) für Katholyt und Anolyt, die jeweils mit einem Flüssigkeitsspeicher in Verbindung stehen und die durch eine Membran für den Ionenaustausch getrennt sind, wobei die Kammern (1, 2) jeweils mit redoxaktiven Komponenten gefüllt sind, die in Substanz, gelöst oder dispergiert in einem Elektrolytlösungsmittel vorliegen, sowie darin gelösten Leitsalzen und eventuellen weiteren Additiven, erfindungsgemäß dadurch gelöst, dass als redoxaktive Komponenten hochmolekulare Verbindungen und als Membran eine Größenausschlussmembran (3) zur Trennung der in Substanz, in gelöster oder in dispergierter Form vorliegenden hochmolekularen redoxaktiven Komponenten vorgesehen sind.

Bevorzugt werden Redox-Flow-Zellen bei denen die Kammern (1, 2) jeweils mit redoxaktiven Komponenten gefüllt sind, die in Substanz oder gelöst in Wasser bzw. einem organischen Lösungsmittel vorliegen.

Unter dem Begriff "Größenausschlussmembran" ist im Rahmen dieser Beschreibung eine Membran zu verstehen, die mindestens folgende Merkmale aufweist
∘ Trennung von Anoden- und Kathodenraum
∘ Zurückhalten der hochmolekularen redoxaktiven Komponenten
∘ Durchlässigkeit für die Leitsalze des Elektrolyten, die zum Ladungsausgleich dienen, also für Anionen und Kationen des Leitsalzes.

Das Rückhalteprinzip der erfindungsgemäß eingesetzten Membran beruht auf dem Prinzip des Größenausschlusses, d.h. die Membran unterscheidet zwischen redoxaktiven Komponenten und Ionen des Leitsalzes aufgrund deren Größe, welche z.B. durch die Molmasse (Zahlenmittel), Zahl der Wiederholungseinheiten, Ionenradius und/oder Trägheitsradius beschrieben werden kann.

Unter Selektivität wird im Rahmen dieser Beschreibung die Trenngrenze verstanden, bei der die Moleküle die Membran nicht mehr effizient passieren können. Das bedeutet, dass bei einem vorgegebenen Molekulargewicht des Moleküls mindestens 90 % der Moleküle von der Membran zurückgehalten werden.

Die vorgeschlagene Größenausschlussmembran, beispielsweise eine semipermeable Membran oder eine Dialysemembran, trennt diese hochmolekularen redoxaktiven Komponenten in den beiden Kammern vorzugsweise mit einer Selektivität von mindestens 500 g/mol, besonders bevorzugt von mindestens 550 g/mol, wobei als hochmolekulare Komponenten redoxaktive organische beziehungsweise metallorganische Stoffe, Polymere oder Oligomere Verwendung finden, die dementsprechend eine Molmasse größer als die Selektivität der Größenausschlussmembran aufweisen.

Die erfindungsgemäß eingesetzte Größenausschlussmembran trennt nach einem physikalischen (mechanischen) Membrantrennverfahren. Dabei kommt das Prinzip des Größenausschlusses zum Einsatz, d.h. alle Partikel in den polaritätsspezifischen Kammern für Katholyt und Anolyt, die größer als die Membranporen sind, werden von der Membran zurückgehalten.

Die erfindungsgemäß eingesetzte Größenausschlussmembran kann aus unterschiedlichsten Materialien bestehen, sofern die oben aufgeführten Funktionalitäten gewährleistet sind. Die Werkstoffe der Größenausschlussmembran können je nach Anwendungsfall aus Kunststoffen, Keramiken, Gläsern, Metallen oder textilen Flächengebilden bestehen. Beispiele für Werkstoffe sind organische Polymere, wie Cellulose oder modifizierte Cellulose, beispielsweise Celluloseether oder Celluloseester, Polyethersulfon, Polysulfon, Polyvinylidenfluorid, Polyester, Polyurethane, Polyamide, Polypropylen, Polyvinylchlorid, Polyacrylnitril, Polystyrol, Polyvinylalkohol, Polyphenylenoxid, Polyimide, Polytetrafluorethylen und deren Derivate, oder weiterhin Keramiken, Gläser oder Filze. Auch aus mehreren Materialien bestehende Größenausschlussmembranen (Komposite) sind möglich.

Die Größenausschlussmembranen können in verschiedenen Erscheinungsformen der Filterelemente eingesetzt werden. Beispiele dafür sind Flachmembranen, Taschenfilter und Hohlfasermodule. Diese Ausführungsformen sind dem Fachmann bekannt. Bevorzugt werden Flachmembranen eingesetzt.

Die erfindungsgemäß eingesetzte Größenausschlussmembran kann zur besseren Stabilität geträgert sein.

Die Dicke der erfindungsgemäßen eingesetzten Größenausschlussmembran kann in weiten Bereichen schwanken. Typische Dicken liegen im Bereich zwischen 1 µm und 5 mm, insbesondere bevorzugt zwischen 10 µm und 200 µm.

Bei den erfindungsgemäß eingesetzten hochmolekularen redoxaktiven Komponenten kann es sich um beliebige Verbindungen handeln, sofern diese in mindestens zwei unterschiedlichen stabilen Oxidationsstufen vorliegen können und ein Molekulargewicht aufweisen, so dass sie die erfindungsgemäß eingesetzte Größenausschlussmembran nicht passieren können.

Hochmolekulare redoxaktive Komponenten können Polymere oder Oligomere sein, wobei unter Oligomeren Verbindungen mit einer Molmasse von 500 bis 5000 g/mol (Zahlenmittel) verstanden werden und unter Polymeren Verbindungen mit einer Molmasse von mehr als 5000 g/mol (Zahlenmittel) verstanden werden.

Typische erfindungsgemäß eingesetzte redoxaktive Komponenten sind Oligomere oder Polymere, welche ein Polymerrückgrat aufweisen, welches ein oder mehrere aktive Einheiten enthält. Diese aktiven Einheiten können auf verschiedene Weise an das Polymerrückgrad gekoppelt sein. Es kann eine kovalente Verknüpfung der aktiven Einheiten an das Polymerrückgrad vorliegen, d.h. die aktiven Einheiten sind als Seitengruppen kovalent an das Polymerrückgrad gebunden, beispielsweise über C-C-Bindungen oder über Brückengruppen, wie -O-, -S-, -NH-, CO-, -CONH- oder -COO-. Die aktiven Einheiten können aber auch einen Bestandteil des Polymerrückgrads bilden und sind dann kovalent in das Polymerrückgrad eingebunden, beispielsweise über C-C-Bindungen oder über Brückengruppen, wie -O-, -S-, -NH-, CO-, -CONH- oder -COO-. Schließlich können die aktiven Einheiten auch koordinativ oder über supramolekulare Wechselwirkungen an das Polymerrückgrad gebunden sein, beispielsweise über Wasserstoffbrückenbindungen, ionische Wechselwirkungen, pi-pi-Wechselwirkungen oder als Lewis-Säure an Gruppen mit Lewis-Base Eigenschaften, die ihrerseits mit dem Polymerrückgrat verbunden sind oder als als Lewis-Base an Gruppen mit Lewis-Säure Eigenschaften, die ihrerseits mit dem Polymerrückgrat verbunden sind.

Beispiele für Verbindungen, welche das Polymerrückgrat bilden können, sind von ethylenisch ungesättigten Carbonsäuren oder deren Estern oder Amiden abgeleitete Polymere, wie Polymethacrylate, Polyacrylate oder Polyacrylamid, von ethylenisch ungesättigten Arylverbindungen abgeleitete Polymere, wie Polystyrol, von Vinylestern gesättigter Carbonsäuren abgeleitete Polymere oder deren Derivate, wie Polyvinylacetat oder Polyvinylalkohol, von Olefinen bzw. bi- oder polycyclischen Olefinen abgeleitete Polymere, wie Polyethylen, Polypropylen oder Polynorbornen, von imid-bildendenen Tetracarbonsäuren und Diaminen abgeleitete Polyimide, von natürlich vorkommenden Polymeren sowie deren chemisch modifizierten Derivaten abgeleitete Polymere, wie Cellulose oder Celluloseether, sowie Polyurethane, Polyvinylether, Polythiophene, Polyacetylen, Polyalkylenglycole, Poly-7-oxanorbornen, Polysiloxane, Polyalkylenglycol und deren Derivate, wie deren Ether, vorzugsweise Polyethylenglycol und deren Derivate. Besonders bevorzugt eingesetzte Stoffklassen, welche das Polymerrückgrat bilden, sind Polymethacrylate, Polyacrylate, Polystyrol, Polyalkylenglycole und Polyvinylether.

Beispiele für Verbindungen, welche die aktive Einheit bilden können sind Verbindungen, die Nitroxid-Radikale oder 2,2-Diphenyl-1-picrylhydrazyl-Radikale bilden, Wurster-Salze, Chinone, Verbindungen, die Galvinoxyl-Radikale, Phenoxyl-Radikale, Triarylmethyl-Radikale, Polychlorotriphenylmethyl-Radikale, Phenalenyl-Radikale, Cyclopentadienyl-Radikale, Iminoxyl-Radikale, Verdazyl-Radikale, Nitronylnitroxid-Radikale oder Thiazyl-Radikale bilden können, Indigo, Disulfide, Thiafulvalene, Thioether, Thiolane, Thiophene, Viologen, Tetraketopiperazin, Chinoxalin, Triarylamin, Calix[4]aren, Anthrachinonylsulfid, Phthalazin, Cinnolin, Ferrocen, Carbazol, Polyindol, Polypyrrol, Polyanilin, Polythiophen, Poly-N,N'-diallyl-2,3,5,6-tetraketopiperazin, 2,5-Di-tert-butyl-4-methoxy-phenoxy-propylester, Poly-2-phenyl-1,3-dithiolan, Poly[methantetryltetrathio-methylen], Poly-2,4-dithio-pentanylen, Polyethen-1,1,2,2-tetrathiol, Poly-3,4-ethylen-dioxythiophen, 5,5-Bismethylthio-2,2-bithiophen, Poly-1,2,4,5-tetrakispropylthiobenzol, Poly-5-amino-1,4-dihydrobenzo[d]-1',2'-dithiadien-co-anilin, Poly-5,8-dihydro-1H,4H-2,3,6,7-tetrathia-anthracen, Polyanthra[1',9',8'-b,c,d,e][4',10',5'-b',c',d',e']bis-[1,6,6a6a-SIV-trithia]-pentalen, Polyenoligosulfid, Poly-1,2-bisthiophen-3-ylmethyldisulfan, Poly-3-thienyl-methyl disulfid-co-benzyl disulfid, Polytetrathionaphthalin, Polynaphtho[1,8-cd] [1,2]-dithiol, Poly-2,5-dimercapto-1,3,4-thiadiazol, Polysulfid, Polythiocyanogen, Polyazulen, Polyfluoren, Polynaphthalin, Polyanthracen, Polyfuran, Tetrathiafulvalen oder Polyoxyphenazin und deren Isomere und Derivate.

Die aktiven Einheiten sind vorzugsweise mit dem Polymerrückgrat kovalent verbunden. Daneben können aber auch Polymer-Addukte eingesetzt werden.

Besonders bevorzugt werden Polymere eingesetzt, welche als redoxaktive Komponenten Nitroxid-Radikale, Verdazyl-Radikale oder Nitronylnitroxid-Radikale bildende Gruppen, Viologene oder Chinone enthalten.

Beispiele für Nitroxid-Radikale bildende Gruppen sind Piperidine, insbesondere die 2,2,6,6-tetraalkylsubstituierten Derivate, und besonders bevorzugt die 2,2,6,6-tetraalkyl-4-aminosubstituierten Derivate oder die 2,2,6,6-tetraalkyl-4-hydroxysubstituierten Derivate.

Beispiele für Viologene sind Bipyridylderivate, insbesondere die 4,4'-Bipyridylderivate, die insbesondere in 4,4'-Position alkylsubstituiert sind. Es können vorteilhafterweise auch "verlängerte" Viologene eingesetzt werden; dabei handelt es sich um Oligomere aufgebaut aus Arylen-, Alkylen-, Alkylenether- oder Thiopheneinheiten, welche zwischen den Pyridineinheiten eingebaut und mit diesen kovalent verbunden sind.

Beispiele für Chinone sind Oxidationsprodukte von Phenolen, wie von Hydrochinon, von Anthrachinon oder von 1,4-Dihydroxynaphthalin. Neben 1,4-Benzochinon wird 1,4-Naphthochinon bevorzugt.

Ganz besonders bevorzugt werden Polymere eingesetzt, welche ein Polymerrückgrat ausgewählt aus der Gruppe der Polymethacrylate, Polyacrylate, Polystyrole, Polyalkylenglycole oder Polyvinylether aufweisen und an dieses kovalent gebundene redoxaktive Komponenten ausgewählt aus der Gruppe der Nitroxid-Radikale, der Verdazyl-Radikale oder der Nitronylnitroxid-Radikale bildenden Gruppen, Viologene oder Chinone.

Ein Beispiel für ein Polymer mit Polymethacrylat-Rückgrat bzw. mit Polyacrylat-Rückgrat mit daran kovalent gebundenen Nitroxid-Radikale bildendenen Gruppen sind Polymethacrylate oder Polyacrylate mit 2,2,6,6-tetraalkylsubstituierten Piperidinen, die über ein 4-Sauerstoffatom an die Carboxylgruppen des Polymethacrylats bzw. des Polyacrylats gebunden sind. Ein besonders bevorzugtes Beispiel für ein solches Polymer ist Poly(2,2,6,6-tetramethylpiperidinyloxy-methacrylat-co-poly(ethylenglykol)-methylether-methacrylat).

Ein Beispiel für ein Polymer mit Polyalkylenglycol-Rückgrat mit copolymerisierten Viologenresten sind Polyethylenglycole mit copolymerisierten 4,4'-Bipyridylresten, die über die Pyridyl-Stickstoffatome an C-Atome des Ethylenglycols gebunden sind. Ein besonders bevorzugtes Beispiel für ein solches Polymer ist Poly(4,4'-bipyridin-*co-*poly(ethylenglykol)).

Die mittlere Molmasse (Zahlenmittel) der hochmolekularen redoxaktiven Komponente ist typischerweise mindestens 500 g/mol, vorzugsweise mindestens 550 g/mol, besonders bevorzugt mindestens 1000 g/mol, und beträgt besonders bevorzugt 1000 bis 500000 g/mol und insbesondere 1000 bis 50000 g/mol.

Die redoxaktive Komponenten enthaltenden Polymeren können als lineare Polymere oder als verzweigte Polymere vorliegen, beispielsweise als Kamm- oder Sternpolymere, Dendrimere, Leiterpolymere, ringförmige Polymere, Polycatenane oder Polyrotaxane.

Vorzugsweise setzt man verzweigte Polymere ein, insbesondere Kamm- oder Sternpolymere, Dendrimere, Leiterpolymere, ringförmige Polymere, Polycatenane oder Polyrotaxane. Diese Typen zeichnen sich durch eine erhöhte Löslichkeit aus und die Viskosität der erhaltenen Lösungen ist in der Regel niedriger als bei entsprechenden linearen Polymeren.

Die Viskosität des erfindungsgemäß eingesetzten Elektrolyten liegt typischerweise im Bereich von 1 mPas bis zu 10⁶ mPas, insbesondere bevorzugt 10² bis 10⁴ mPas (gemessen bei 25 °C mit einem Rotationsviskosimeter, Platte/Platte).

Die Löslichkeit der erfindungsgemäß eingesetzen redoxaktive Komponenten enthaltenden Polymeren kann weiterhin durch Co-Polymerisation bzw. Funktionalisierung, z.B. mit Polyethylenglycol, Polymethacrylsäure, Polyacrylsäure, Poly-2-methyloxazolin oder Polystyrolsulfonat, verbessert werden.

Die Herstellung der erfindungsgemäß eingesetzen redoxaktive Komponenten enthaltenden Polymeren kann mit den üblichen Polymerisationsverfahren erfolgen. Beispiele dafür sind die Polymerisation in Substanz, die Polymerisation in Lösung, die Fällungspolymerisation oder die Emulsions- bzw. Suspensionspolymerisation sowie auch polymeranaloge Funktionalisierungen. Dem Fachmann sind diese Vorgehensweisen bekannt.

Die redoxaktiven Komponenten können als solche, d.h. ohne Lösungsmittel, eingesetzt werden, sofern diese bei Einsatztemperatur flüssig sind. Vorzugsweise werden die redoxaktiven Komponenten jedoch zusammen mit einem Lösungsmittel eingesetzt.

Die erfindungsgemäße Redox-Flow-Zelle kann neben den oben beschriebenen Komponenten noch weitere für solche Zellen übliche Elemente oder Komponenten enthalten. Einige dieser Komponenten sind zwingend, während andere Komponenten fallweise eingesetzt werden können.

Beispiele für zwingend vorhandene Komponenten sind
∘ Elektroden, wie z.B. Elektroden aus Graphit, Graphitvlies, Graphitpapier, Carbon-Nano-Tube-Teppichen oder Graphen
∘ Stromableiter, wie z.B. aus Graphit oder aus Metallen
∘ Elektrolyte enthaltend darin gelöst Leitsalze; dabei kann es sich um flüssige redoxaktive Polymere handeln oder um eine Lösung, Emulsion oder Suspension aus redoxaktiven Polymeren und Elektrolyt-Lösungsmitteln
∘ Beispiele für Elektrolyt-Lösungsmittel sind Wasser oder organische Lösungsmittel, wie Acetonitril, organische Carbonate, Alkohole, Dimethylformamid, Dimethylsulfoxid, Dimethylacetamid, Dichlormethan, Nitromethan, Tetrahydrofuran, bevorzugt Wasser, Acetonitril und organische Carbonate
∘ Beispiele für Elektrolyt-Leitsalze sind Salze enthaltend Anionen ausgewählt aus der Gruppe PF₆, BF₄, SbF₆, AsF₆, ClO₄, CF₃SO₃, SO₂C₂F₅, C₄F₉SO₃, (CF₃SO₃)N₂, OH, SO₄, F, Cl, Br oder I sowie Kationen ausgewählt aus der Gruppe H, Alkali- oder Erdalkalimetallkationen, sowie substituierten oder unsubstituierten Ammoniumkationen.
∘ Fördermittel, wie Pumpen, sowie Tanks und Rohre für den Transport und die Lagerung von redoxaktiven Komponenten

Beispiele für optional vorhandene Komponenten sind
∘ Elektrolyte enthaltend neben den darin gelösten Leitsalzen zusätzlich Elektrolyt-Additive
∘ Beispiele für Elektrolyt-Additive sind Tenside, Viskositätsmodifizierer, Pestizide, Puffer, Stabilisatoren, Katalysatoren, Leitadditive, Frostschutzmittel, Temperaturstabilisatoren

Durch die besagten in Substanz, in gelöster oder in dispergierter Form vorliegenden hochmolekularen redoxaktiven Komponenten der beiden Kammern und die Trennung deren Flusskreisläufe mit der vorgenannten Selektivität wird eine Redox-Flow-Zelle geschaffen, die keine kostenintensiven und toxischen bzw. gefährdenden Elektrolyte enthält, die im Schadensfall austreten und die Umwelt belasten könnten.

Auch die Trennmembran der beiden separaten Flusskreisläufe kann vergleichsweise aufwandgering hergestellt und eingesetzt werden. Sie besteht vorteilhaft aus organischem Material und ist zweckmäßig als Polymermembran ausgeführt.

Bisherige Untersuchungen der erfindungsgemäßen Redox-Flow-Zelle, insbesondere vielfach wiederholte Lade-/Entladeexperimente, lassen bei ihrer Anwendung im Gegensatz zu den eingangs beschriebenen Systemen auf eine wesentlich erhöhte Lebensdauer und geringere Produktionskosten schließen.

Die erfindungsgemäße Redox-Flow-Zelle kann auf unterschiedlichsten Gebieten eingesetzt werden. Dabei kann es sich im weitesten Sinne um die Speicherung von elektrischer Energie für mobile und stationäre Anwendungen handeln. Die Erfindung betrifft auch die Verwendung der Redox-Flow-Zelle für diese Zwecke.

Beispiele für Anwendungen sind Einsätze auf dem Gebiet der Elektromobilität, wie als Speicher in Land-, Luft- und Wasserfahrzeugen, Einsätze als stationäre Speicher für die Notstromversorgung, den Spitzenlastausgleich, sowie für die Zwischenspeicherung elektrischer Energie aus erneuerbaren Energiequellen, insbesondere auf dem Sektor der Photovoltaik und der Windkraft.

Die erfindungsgemäße Redox-Flow-Zelle wird bevorzugt als stationärer Speicher für elektrische Energie eingesetzt.

Die erfindungsgemäßen Redox-Flow-Zellen können in an sich bekannte Weise in serieller oder paralleler Weise miteinander verschaltet werden.

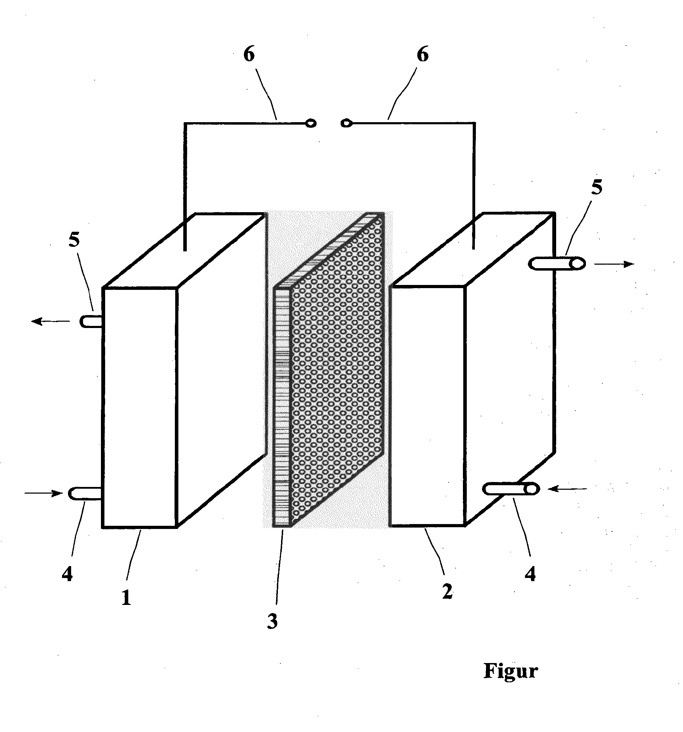

Die Erfindung soll nachstehend anhand einer in der Zeichnung schematisch dargestellten Redox-Flow-Zelle als Ausführungsbeispiels näher erläutert werden.

Die Redox-Flow-Zelle besteht aus zwei baugleichen und als Teflon-Hohlkörper hergestellten Halbzellen (1) und (2), wobei die Halbzelle (1) als Anolyt-Kammer und die Halbzelle (2) als Katholyt-Kammer wirkt.

Die beiden Halbzellen (1, 2) (aus Übersichtsgründen in Explosivdarstellung gezeigt) stehen über eine Größenausschlussmembran (3) hier mit einer Ausschlussgrenze von 1000 g/mol in Verbindung.

Jede Halbzelle (1, 2) besitzt einen Zulaufstutzen (4) sowie einen Ablaufstutzen (5), über welche die Halbzellen (1,2) mittels Schläuchen jeweils an ein Vorratsgefäß (Flüssigkeitsspeicher) angeschlossen werden, die den Anolyten bzw. den Katholyten für die korrespondierende Halbzelle (1) bzw. (2) enthalten (aus Übersichtsgründen in der Zeichnung nicht dargestellt).

Der Anolyt bzw. Katholyt wird (jeweils als separater Flüssigkeitskreislauf durch die Halbzellen (1) bzw. (2) der Redox-Flow-Zelle) durch eine (ebenfalls aus Übersichtsgründen nicht dargestellte) Pumpe aus dem jeweiligen Vorratsgefäß während des Lade-/Entladevorganges durch die entsprechende Halbzelle (1) bzw. (2) gepumpt (angedeutet durch Pfeildarstellungen an den Zulauf- und Ablaufstutzen (4, 5)).

Jede Halbzelle (1, 2) verfügt jeweils über eine interne Elektrode aus Graphit/Graphitfilz, an welchem jeweils in der Halbzelle (1, 2) eine an sich bekannte Elektrodenreaktion stattfindet. Diese internen Elektroden sind jeweils als polaritätsabhängiger Stromableiter (6) für den elektrischen Anschluss aus den Halbzeilen (1, 2) herausgeführt.

Als Katholyt wird eine Lösung (10 mg/mL) aus Poly(2,2,6,6-tetramethylpiperidinyloxy-methacrylat-*co*-poly(ethylenglykol)methylether-methacrylat) in Propylencarbonat genutzt. Als Anolyt eine Lösung (10 mg/mL) von Poly(4,4'-bipyridin-*co-*poly(ethylenglykol)) in Propylenencarbonat. Beiden Lösungen ist Tetrabutylammoniumhexafluorophosphat (0,1 mol/L) als Leitsalz beigesetzt. Die so erhaltene Zelle konnte wiederholt bei konstantem Strom von 500 µA geladen und entladen, wobei sie eine Entladespannung von circa 1,1 V aufwies.

Aufstellung der verwendeten Bezugszeichen
- 1, 2: - Halbzelle
- 3: - Größenausschlussmembran
- 4: - Zuflussstutzen
- 5: - Abflussstutzen
- 6: - Stromableiter

## Patentansprüche

1. Redox-Flow-Zelle zur Speicherung elektrischer Energie enthaltend eine Reaktionszelle mit zwei polaritätsspezifischen Kammern (1, 2) für Katholyt und Anolyt, die jeweils mit einem Flüssigkeitsspeicher in Verbindung stehen und die durch eine Membran für den Ionenaustausch getrennt sind, wobei die Kammern (1, 2) jeweils mit redoxaktiven Komponenten gefüllt sind, die in Substanz, gelöst oder dispergiert in einem Elektrolytlösungsmittel vorliegen, sowie darin gelösten Leitsalzen und eventuellen weiteren Additiven, **dadurch gekennzeichnet, dass** als redoxaktive Komponenten hochmolekulare Verbindungen und als Membran eine Größenausschlussmembran (3) zur Trennung der in Substanz, in gelöster oder in dispergierter Form vorliegenden hochmolekularen redoxaktiven Komponenten vorgesehen sind, wobei die Größenausschlussmembran eine Selektivität von mindestens 500 g/mol und die hochmolekularen redoxaktiven Komponenten ein entsprechendes Zahlenmittel der Molmasse von größer als 500 g/mol aufweisen.

2. Redox-Flow-Zelle gemäß Anspruch 1, **dadurch gekennzeichnet, dass** die Kammern (1, 2) jeweils mit redoxaktiven Komponenten gefüllt sind, die in Substanz oder gelöst in Wasser bzw. einem organischen Lösungsmittel vorliegen.

3. Redox-Flow-Zelle gemäß Anspruch 1, **dadurch gekennzeichnet, dass** als Größenausschlussmembran eine semipermeable Membran vorgesehen ist.

4. Redox-Flow-Zelle gemäß Anspruch 1, **dadurch gekennzeichnet, dass** als Größenausschlussmembran eine Dialysemembran vorgesehen ist.

5. Redox-Flow-Zelle gemäß Anspruch 1, **dadurch gekennzeichnet, dass** die hochmolekularen redoxaktiven Komponenten ein entsprechendes Zahlenmittel der Molmasse von größer gleich 550 g/mol aufweisen.

6. Redox-Flow-Zelle gemäß Anspruch 1, **dadurch gekennzeichnet, dass** die Größenausschlussmembran aus Kunststoffen, Keramiken, Gläsern, Metallen, Kompositen oder textilen Flächengebilden oder Kombinationen davon besteht, bevorzugt aus organischen Polymere, insbesondere aus Cellulose oder modifizierter Cellulose, aus Polyethersulfon, Polysulfon, Polyvinylidenfluorid, Polyester, Polyurethanen, Polyamiden, Polypropylen, Polyvinylchlorid, Polyacrylnitril, Dextran, Lignin, Polypropylenoxid, Polyetylenimin, Polyacrylsäure, Polystyrol, Polyvinylalkohol, Polyphenylenoxid, Polyimiden, Polytetrafluorethylen oder deren Derivaten.

7. Redox-Flow-Zelle gemäß Anspruch 1, **dadurch gekennzeichnet, dass** die Größenausschlussmembran aus organischem Material besteht und insbesondere als Polymermembran ausgeführt ist.

8. Redox-Flow-Zelle gemäß Anspruch 1, **dadurch gekennzeichnet, dass** die Dicke der Größenausschlussmembran im Bereich zwischen 1 µm und 5 mm liegt insbesondere bevorzugt zwischen 10 µm und 200 µm.

9. Redox-Flow-Zelle gemäß Anspruch 1, **dadurch gekennzeichnet, dass** als hochmolekulare Komponenten redoxaktive organische oder metallorganische Stoffe, Oligomere oder Polymere Verwendung finden.

10. Redox-Flow-Zelle gemäß Anspruch 1, **dadurch gekennzeichnet, dass** als redoxaktive Komponenten Polymere eingesetzt werden, die Verbindungen enthalten, welche ausgewählt werden aus der Gruppe der Nitroxid-Radikale oder 2,2-Diphenyl-1-picrylhydrazyl-Radikale bildenden Verbindungen, der Wurster-Salze, der Chinone, der Verbindungen, die Galvinoxyl-Radikale, Phenoxyl-Radikale, Triarylmethyl-Radikale, Polychlorotriphenylmethyl-Radikale, Phenalenyl-Radikale, Cyclopentadienyl-Radikale, Iminoxyl-Radikale, Verdazyl-Radikale, Nitronylnitroxid-Radikale oder Thiazyl-Radikale bilden können, Indigo, Disulfide, Thiafulvalene, Thioether, Thiolane, Thiophene, Viologen, Tetraketopiperazin, Chinoxalin, Triarylamin, Calix[4]aren, Anthrachinonylsulfid, Phthalazin, Cinnolin, Ferrocen, Carbazol, Polyindol, Polypyrrol, Polyanilin, Polythiophen, Poly-N,N'-diallyl-2,3,5,6-tetraketopiperazin, 2,5-Di-tert-butyl-4-methoxy-phenoxy-propylester, Poly-2-phenyl-1,3-dithiolan, Poly[methantetryltetrathio-methylen], Poly-2,4-dithio-pentanylen, Polyethen-1,1,2,2-tetrathiol, Poly-3,4-ethylen-dioxythiophen, 5,5-Bismethylthio-2,2-bithiophen, Poly-1,2,4,5-tetrakispropylthiobenzol, Poly-5-amino-1,4-dihydrobenzo[d]-1',2'-dithiadien-co-anilin, Poly-5,8-dihydro-1 H,4H-2,3,6,7-tetrathia-anthracen, Poly-anthra[1',9',8'-b,c,d,e][4',10',5'-b',c',d',e']bis-[1,6,6a6a-SIV-trithia]-pentalen, Polyenoligosulfid, Poly-1,2-bisthiophen-3-ylmethyldisulfan, Poly-3-thienyl-methyl disulfid-co-benzyl disulfid, Polytetrathionaphthalin, Polynaphtho[1,8-cd] [1,2]-dithiol, Poly-2,5-dimercapto-1,3,4-thiadiazol, Polysulfid, Polythiocyanogen, Polyazulen, Polyfluoren, Polynaphthalin, Polyanthracen, Polyfuran, Tetrathiafulvalen oder Polyoxyphenazin und deren Isomere und Derivate.

11. Redox-Flow-Zelle gemäß Anspruch 10, **dadurch gekennzeichnet, dass** als redoxaktive Komponenten Polymere eingesetzt werden, welche ein Polymerrückgrat aufweisen, das ausgewählt ist aus der Gruppe der von ethylenisch ungesättigten Carbonsäuren oder deren Estern oder Amiden abgeleiteten Polymere, insbesondere der Polymethacrylate, der Polyacrylate oder der Polyacrylamide, oder der von ethylenisch ungesättigten Arylverbindungen abgeleiteten Polymere, insbesondere des Polystyrols, oder der von Vinylestern gesättigter Carbonsäuren abgeleiteten Polymere oder deren Derivaten, insbesondere des Polyvinylacetats oder des Polyvinylalkohols, oder der von Olefinen oder von bi- oder polycyclischen Olefinen abgeleiteten Polymere, insbesondere des Polyethylens, Polypropylens oder Polynorbornens, oder der von imid-bildendenen Tetracarbonsäuren und Diaminen abgeleiteten Polyimide, oder der von natürlich vorkommenden Polymeren sowie deren chemisch modifizierten Derivaten abgeleiteten Polymeren, insbesondere Cellulose oder Celluloseether, oder der Polyurethane, Polyvinylether, Polythiophene, Polyacetylen, Polyalkylenglycole, Poly-7-oxanorbornen, Polysiloxane, Polyalkylenglycol und deren Derivate.

12. Redox-Flow-Zelle gemäß Anspruch 1, **dadurch gekennzeichnet, dass** als redoxaktive Komponenten Polymere eingesetzt werden, die Nitroxid-Radikale, Verdazyl-Radikale oder Nitronylnitroxid-Radikale bildende Gruppen, Viologene oder Chinone enthalten, insbesondere die Piperidine enthalten, besonders bevorzugt die 2,2,6,6-tetraalkylsubstituierten Derivate, und ganz besonders bevorzugt die 2,2,6,6-tetraalkyl-4-aminosubstituierten Derivate oder die 2,2,6,6-tetraalkyl-4-hydroxysubstituierten Derivate, oder die insbesondere Bipyridylderivate enthalten, besonders bevorzugt die 4,4'-Bipyridylderivate, und ganz besonders bevorzugt die 4,4'-Bipydirylderivate, die in 4,4'-Position alkylsubstituiert sind, oder die Chinone enthalten, die Oxidationsprodukte von Phenolen darstellen, insbesondere von Hydrochinon, von Anthrachinon oder von 1,4-Dihydroxynaphthalin.

13. Redox-Flow-Zelle gemäß Anspruch 12, **dadurch gekennzeichnet, dass** als redoxaktive Komponenten Polymere mit Polymethacrylat-Rückgrat oder mit Polyacrylat-Rückgrat mit daran kovalent gebundenen Nitroxid-Radikale bildendenen Gruppen enthalten sind, insbesondere Polymethacrylate oder Polyacrylate mit 2,2,6,6-tetraalkylsubstituierten Piperidinen, die über ein 4-Sauerstoffatom an die Carboxylgruppen des Polymethacrylats bzw. des Polyacrylats gebunden sind und ganz besonders bevorzugt Poly(2,2,6,6-tetramethylpiperidinyloxy-methacrylat-*co-*poly(ethylenglykol)-methylether-methacrylat) oder dass als redoxaktive Komponenten Polymere mit Polyalkylenglycol-Rückgrat mit copolymerisierten Viologenresten enthalten sind, insbesondere Polyethylenglycole mit copolymerisierten 4,4'-Bipyridylresten, die über die Pyridyl-Stickstoffatome an C-Atome des Ethylenglycols gebunden sind und ganz besonders bevorzugt Poly(4,4'-bipyridin-co-poly(ethylenglykol)).

14. Redox-Flow-Zelle gemäß Anspruch 12, **dadurch gekennzeichnet, dass** als redoxaktive Komponenten Polymere eingesetzt werden, welche ein Polymerrückgrat ausgewählt aus der Gruppe der Polymethacrylate, Polyacrylate, Polystyrole, Polyalkylenglycole oder Polyvinylether aufweisen und an dieses kovalent gebundene redoxaktive Komponenten ausgewählt aus der Gruppe der Nitroxid-Radikale, Verdazyl-Radikale oder Nitronylnitroxid-Radikale bildende Gruppen, Viologene oder Chinone.

15. Redox-Flow-Zelle gemäß Anspruch 1, **dadurch gekennzeichnet, dass** als redoxaktive Komponenten Polymere eingesetzt werden, die als lineare Polymere oder als verzweigte Polymere vorliegen, insbesondere als Kamm- oder Sternpolymere, Dendrimere, Leiterpolymere, ringförmige Polymere, Polycatenane oder Polyrotaxane.

16. Redox-Flow-Zelle gemäß Anspruch 1, **dadurch gekennzeichnet, dass** die Viskosität des eingesetzten Elektrolyten im Bereich von 1 mPas bis zu 10⁶ mPas liegt, insbesondere bevorzugt 10² bis 10⁴ mPas (gemessen bei 25 °C mit dem Rotationsviskosimeter, Platte/Platte).

17. Redox-Flow-Zelle gemäß Anspruch 1, **dadurch gekennzeichnet, dass** das Elektrolytlösungsmittel weitere Additive enthält, die ausgewählt werden aus der Gruppe der Tenside, Viskositätsmodifizierer, Pestizide, Puffer, Stabilisatoren, Katalysatoren, Leitadditive, Frostschutzmittel und/oder der Temperaturstabilisatoren.

18. Verwendung der Redox-Flow-Zelle nach Anspruch 1 für die Speicherung von elektrischer Energie für mobile und stationäre Anwendungen.

19. Verwendung gemäß Anspruch 18, **dadurch gekennzeichnet, dass** die Redox-Flow-Zelle auf dem Gebiet der Elektromobilität eingesetzt wird, insbesondere als Speicher in Land-, Luft- und Wasserfahrzeugen, oder dass die Redox-Flow-Zelle als stationärer Speicher für die Notstromversorgung, den Spitzenlastausgleich, sowie für die Zwischenspeicherung elektrischer Energie aus erneuerbaren Energiequellen, insbesondere auf dem Sektor der Photovoltaik und der Windkraft, eingesetzt wird.

## Claims

1. Redox flow cell for storage of electric energy, containing a reaction cell having two polarity-specific chambers (1, 2) for catholyte and anolyte, which are each connected to a store for liquid and are separated by a membrane for ion exchange, where the chambers (1, 2) are each filled with redox-active components present undiluted, in dissolved form or dispersed in an electrolyte solvent and also conducting salts dissolved therein and possibly further additives, **characterized in that** high molecular weight compounds are provided as redox-active components and a size-exclusion membrane (3) is provided as membrane for separating the high molecular weight redox-active components present undiluted, in dissolved form or in dispersed form, where the size-exclusion membrane has a selectivity of at least 500 g/mol and the high molecular weight redox-active components have a corresponding number average of the molar mass of greater than 500 g/mol.

2. Redox flow cell according to Claim 1, **characterized in that** the chambers (1, 2) are each filled with redox-active components which are present undiluted or as a solution in water or an organic solvent.

3. Redox flow cell according to Claim 1, **characterized in that** a semipermeable membrane is provided as size-exclusion membrane.

4. Redox flow cell according to Claim 1, **characterized in that** a dialysis membrane is provided as size-exclusion membrane.

5. Redox flow cell according to Claim 1, **characterized in that** the high molecular weight redox-active components have a corresponding number average of the molar mass of greater than or equal to 550 g/mol.

6. Redox flow cell according to Claim 1, **characterized in that** the size-exclusion membrane consists of plastics, ceramics, glasses, metals, composites or sheet-like textile structures or combinations thereof, preferably organic polymers, in particular cellulose or modified cellulose, polyether sulfone, polysulfone, polyvinylidene fluoride, polyesters, polyurethanes, polyamides, polypropylene, polyvinyl chloride, polyacrylo-nitrile, dextran, lignin, polypropylene oxide, polyethylenimine, polyacrylic acid, polystyrene, polyvinyl alcohol, polyphenylene oxide, polyimides, polytetrafluoroethylene or derivatives thereof.

7. Redox flow cell according to Claim 1, **characterized in that** the size-exclusion membrane consists of organic material and is, in particular, configured as polymer membrane.

8. Redox flow cell according to Claim 1, **characterized in that** the thickness of the size-exclusion membrane is in the range from 1 µm to 5 mm, particularly preferably from 10 µm to 200 µm.

9. Redox flow cell according to Claim 1, **characterized in that** redox-active organic or metal-organic materials, oligomers or polymers are used as high molecular weight components.

10. Redox flow cell according to Claim 1, **characterized in that** polymers containing compounds which are selected from the group consisting of the compounds which form nitroxide radicals or 2,2-diphenyl-1-picrylhydrazyl radicals, Wurster salts, quinones, compounds which can form galvinoxyl radicals, phenoxyl radicals, triarylmethyl radicals, polychlorotriphenylmethyl radicals, phenalenyl radicals, cyclopentadienyl radicals, iminoxyl radicals, verdazyl radicals, nitronylnitroxide radicals or thiazyl radicals, indigo, disulfides, thiafulvalenes, thioethers, thiolanes, thiophenes, viologen, tetraketopiperazine, quinoxaline, triarylamine, calix[4]arene, anthraquinonyl sulfide, phthalazine, cinnoline, ferrocene, carbazole, polyindole, polypyrrol, polyaniline, polythiophene, poly-N,N'-diallyl-2,3,5,6-tetraketopiperazine, 2,5-di-tert-butyl-4-methoxyphenoxypropyl esters, poly-2-phenyl-1,3-dithiolane, poly[methanetetryltetra-thiomethylene], poly-2,4-dithiopentanylene, polyethene-1,1,2,2-tetrathiol, poly-3,4-ethylene-dioxythiophene, 5,5-bismethylthio-2,2-bithiophene, poly-1,2,4,5-tetrakispropylthiobenzene, poly-5-amino-1,4-dihydrobenzo[d]-1'2'-dithiadiene-co-aniline, poly-5,8-dihydro-1H,4H-2,3,6,7-tetrathia-anthracene, polyanthra[1',9',8'-b,c,d,e]-[4',10',5'-b',c',d',e']bis[1,6,6a6a-SIV-trithia]-pentalene, polyene oligosulfide, poly-1,2-bisthiophen-3-ylmethyldisulfane, poly-3-thienylmethyl disulfide-co-benzyl disulfide, polytetrathionaphthalene, polynaphtho[1,8-cd][1,2]dithiol, poly-2,5-dimercapto-1,3,4-thiadiazole, polysulfide, polythiocyanogen, polyazulene, polyfluorene, polynaphthalene, polyanthracene, polyfuran, tetrathiafulvalene or polyoxyphenazine and isomers and derivatives thereof, are used as redox-active components.

11. Redox flow cell according to Claim 10, **characterized in that** polymers having a polymer backbone selected from the group consisting of polymers derived from ethylenically unsaturated carboxylic acids or esters or amides thereof, in particular polymethacrylates, polyacrylates or polyacrylamides, or polymers derived from ethylenically unsaturated aryl compounds, in particular polystyrene, or polymers derived from vinyl esters of saturated carboxylic acids or derivatives thereof, in particular polyvinyl acetate or polyvinyl alcohol, or polymers derived from olefins or from bicyclic or polycyclic olefins, in particular polyethylene, polypropylene or polynorbornene, or polyimides derived from imide-forming tetracarboxylic acids and diamines, and polymers derived from naturally occurring polymers and also chemically modified derivatives thereof, in particular cellulose or cellulose ethers, and polyurethanes, polyvinyl ethers, polythiophenes, polyacetylene, polyalkylene glycols, poly-7-oxanorbornene, polysiloxane, polyalkylene glycol and derivatives thereof are used as redox-active components.

12. Redox flow cell according to Claim 1, **characterized in that** polymers containing groups which form nitroxide radicals, verdazyl radicals or nitronylnitroxide radicals, viologens or quinones, in particular containing piperidines, particularly preferably the 2,2,6,6-tetraalkyl-substituted derivatives and very particularly preferably the 2,2,6,6-tetraalkyl-4-amino-substituted derivatives or the 2,2,6,6-tetraalkyl-4-hydroxy-substituted derivatives, or containing in particular bipyridyl derivatives, particularly preferably the 4,4'-bipyridyl derivatives and very particularly preferably the 4,4'-bipyridyl derivatives which are alkyl-substituted in the 4,4' positions, or containing quinones which represent the oxidation products of phenols, in particular hydroquinone, anthraquinone or 1,4-dihydroxynaphthalene, are used as redox-active components.

13. Redox flow cell according to Claim 12, **characterized in that** polymers having a polymethacrylate backbone or a polyacrylate backbone having groups which form nitroxide radicals covalently bound thereto, in particular polymethacrylates or polyacrylates having 2,2,6,6-tetraalkyl-substituted piperidines which are bound via a 4-oxygen atom to the carboxyl groups of the polymethacrylate or of the polyacrylate and very particularly preferably poly(2,2,6,6-tetramethylpiperidinyloxy methacrylate-co-poly(ethylene glycol) methyl ether methacrylate) are present as redox-active components or **in that** polymers having a polyalkylene glycol backbone having copolymerized viologen radicals, in particular polyethylene glycols having copolymerized 4,4'-bipyridyl radicals which are bound via the pyridyl nitrogens to carbon atoms of the ethylene glycol and very particularly preferably poly(4,4'-bipyridine-co-poly(ethylene glycol)) are present as redox-active components.

14. Redox flow cell according to Claim 12, **characterized in that** polymers having a polymer backbone selected from the group consisting of polymethacrylates, polyacrylates, polystyrenes, polyalkylene glycols and polyvinyl ethers and having redox-active components selected from the group consisting of groups which form nitroxide radicals, verdazyl radicals or nitronylnitroxide radicals, viologens and quinones covalently bound to this polymer backbone are used as redox-active components.

15. Redox flow cell according to Claim 1, **characterized in that** polymers which are present as linear polymers or as branched polymers, in particular as comb or star polymers, dendrimers, conductive polymers, cyclic polymers, polycatenanes or polyrotaxanes, are used as redox-active components.

16. Redox flow cell according to Claim 1, **characterized in that** the viscosity of the electrolytes used is in the range from 1 mPas to 10⁶ mPas, particularly preferably from 10² to 10⁴ mPas (measured at 25°C using a rotational viscometer, plate/plate).

17. Redox flow cell according to Claim 1, **characterized in that** the electrolyte solvent contains further additives selected from the group consisting of surfactants, viscosity modifiers, pesticides, buffers, stabilizers, catalysts, conductivity additives, antifreezes and temperature stabilizers.

18. Use of the redox flow cell according to Claim 1 for the storage of electric energy for mobile and stationary applications.

19. Use according to Claim 18, **characterized in that** the redox flow cell is used in the field of electromobility, in particular as energy store in land, air and water vehicles, or **in that** the redox flow cell is used as stationary energy store for emergency power supply, peak load equalization and for the temporary storage of electric energy from renewable energy sources, in particular in the sector of photovoltaics and wind power.

## Revendications

1. Elément de batterie à flux redox destiné à stocker de l'énergie électrique, contenant une cellule de réaction à deux chambres (1, 2) de polarité spécifique pour le catholyte et l'anolyte, qui sont chacune en communication avec un réservoir de liquide et qui sont séparées par une membrane pour l'échange d'ions, les chambres (1, 2) étant chacune remplies de composants à activité redox qui sont présents en substance, sous forme dissoute ou dispersée dans un solvant électrolytique, ainsi que de sels conducteurs qui y sont dissous et d'autres additifs éventuels, **caractérisé en ce que** sont prévus, en tant que composants à activité redox, des composés de masse moléculaire élevée et, en tant que membrane, une membrane d'exclusion par la taille (3) servant à séparer les composants à activité redox de masse moléculaire élevée présents en substance, sous forme dissoute ou dispersée, la membrane d'exclusion par la taille présentant une sélectivité d'au moins 500 g/mol et les composants à activité redox de masse moléculaire élevée une masse molaire moyenne correspondante supérieure à 500 g/mol.

2. Elément de batterie à flux redox selon la revendication 1, **caractérisé en ce que** les chambres (1, 2) sont remplies chacune de composants à activité redox qui sont présents en substance ou sous forme dissoute dans de l'eau ou un solvant organique.

3. Elément de batterie à flux redox selon la revendication 1, **caractérisé en ce qu'**une membrane semi-perméable est prévue comme membrane d'exclusion par la taille.

4. Elément de batterie à flux redox selon la revendication 1, **caractérisé en ce qu'**une membrane de dialyse est prévue comme membrane d'exclusion par la taille.

5. Elément de batterie à flux redox selon la revendication 1, **caractérisé en ce que** les composants à activité redox de masse moléculaire élevée présentent une masse molaire moyenne correspondante supérieure ou égale à 550 g/mol.

6. Elément de batterie à flux redox selon la revendication 1, **caractérisé en ce que** la membrane d'exclusion par la taille est constituée de matières plastiques, céramiques, verres, métaux, composites, structures textiles planes ou de combinaisons de ceux-ci, de préférence de polymères organiques, en particulier de de cellulose ou de cellulose modifiée, de polyéthersulfone, polysulfone, fluorure de polyvinylidène, polyester, polyuréthanes, polyamides, polypropylène, chlorure de polyvinyle, polyacrylonitrile, dextrane, lignine, oxyde de polypropylène, polyéthylènimine, acide polyacrylique, polystyrène, alcool polyvinylique, oxyde de polyphénylène, polyimides, polytétrafluoréthylène ou de leurs dérivés.

7. Elément de batterie à flux redox selon la revendication 1, **caractérisé en ce que** la membrane d'exclusion par la taille est constituée de matériau organique et en particulier réalisée sous la forme d'une membrane polymère.

8. Elément de batterie à flux redox selon la revendication 1, **caractérisé en ce que** l'épaisseur de la membrane d'exclusion par la taille se situe dans la plage comprise entre 1 µm et 5 mm, particulièrement de préférence entre 10 µm et 200 µm.

9. Elément de batterie à flux redox selon la revendication 1, **caractérisé en ce que** des substances organiques ou organométalliques, des oligomères ou des polymères sont utilisés comme composants à activité redox de masse moléculaire élevée.

10. Elément de batterie à flux redox selon la revendication 1, **caractérisé en ce que** l'on utilise comme composants à activité redox des polymères qui contiennent des composés qui sont sélectionnés dans le groupe constitué des composés formant des radicaux nitroxyde ou des radicaux 2,2-diphényl-1-picrylhydrazyl, des sels de Wurster, des quinones, des composés qui peuvent former des radicaux galvinoxyl, des radicaux phénoxyl, des radicaux triarylméthyl, des radicaux polychlorotriphénylméthyl, des radicaux phénalényl, des radicaux cyclopentadiényl, des radicaux iminoxyl, des radicaux verdazyl, des radicaux nitronyl-nitroxyde ou des radicaux thiazyl, de l'indigo, des disulfures, des thiafulvalènes, des thioéthers, des thiolanes, des thiophènes, du viologène, de la tétracétopipérazine, de la quinoxaline, de la triarylamine, du calix[4]arène, du sulfure d'anthraquinonyl, de la phthalazine, de la cinnoline, du ferrocène, du carbazole, du polyindole, du polypyrrole, de la polyaniline, du polythiophène, de la poly-N,N'-diallyl-2,3,5,6-tétracétopipérazine, du 2,5-di-tert-butyl-4-méthoxy-phénoxy-propyl ester, du poly-2-phényl-1,3-dithiolane, du poly[méthane-tétryltétrathiométhylène], du poly-2,4-dithio-pentanylène, du polyéthylène-1,1,2,2-tétrathiol, du poly-3,4-éthylène-dioxythiophène, du 5,5-bisméthylthio-2,2-bithiophène, du poly-1,2,4,5-tétrakispropylthiobenzène, de la poly-5-amino-1,4-dihydrobenzo[d]-1',2'-dithiadiène-co-aniline, du poly-5,8-dihydro-1H,4H-2,3,6,7-tétrathia-anthracène, du polyanthra[1',9',8'-b,c,d,e][4',10',5'-b',c',d',e']bis-[1,6,6a6a-SIV-trithia]-pentalène, de l'oligosulfure de polyène, du poly-1,2-bisthiophène-3-yl-méthyl-disulfane, du poly-3-thiényl-méthyl disulfure-co-benzyle disulfure, du polytétrathionaphtalène, du polynaphto[1,8-cd][1,2]-dithiol, du poly-2,5-dimercapto-1,3,4-thiadiazol, du polysulfure, du polythiocyanogène, du polyazulène, du polyfluorène, du polynaphtalène, du polyanthracène, du polyfurane, du tétrathiafulvalène ou de la polyoxyphénazine et de leurs isomères et dérivés.

11. Elément de batterie à flux redox selon la revendication 10, **caractérisé en ce que** l'on utilise comme composants à activité redox des polymères qui présentent un squelette de polymère qui est sélectionné dans le groupe constitué des polymères dérivés d'acides carboxyliques éthyléniquement insaturés ou de leurs esters ou amides, en particulier des polyméthacrylates, des polyacrylates ou des polyacrylamides, ou des polymères dérivés de composés aryles éthyléniquement insaturés, en particulier du polystyrène, ou de polymères dérivés d'esters vinyliques d'acides carboxyliques saturés ou de leurs dérivés, en particulier de l'acétate de polyvinyle ou de l'alcool polyvinylique, ou des polymères dérivés d'oléfines ou d'oléfines bi- ou polycycliques, en particulier du polyéthylène, du polypropylène ou du polynorbornène, ou des polyimides dérivés d'acides tétracarboxyliques formant des imides et de diamines, ou des polymères dérivés de polymères naturels ainsi que de leurs dérivés chimiquement modifiés, en particulier de la cellulose ou de l'éther de cellulose, ou des polyuréthanes, des éthers polyvinyliques, des polythiophènes, du polyacétylène, des polyalkylènes glycols, du poly-7-oxanorbornène, des polysiloxanes, du polyalkylène glycol et de leurs dérivés.

12. Elément de batterie à flux redox selon la revendication 1, **caractérisé en ce que** l'on utilise comme composants à activité redox des polymères qui contiennent des groupes formant des radicaux nitroxyde, des radicaux verdazyl ou des radicaux nitronyl-nitroxyde, des viologènes ou des quinones, en particulier qui contiennent de la pipéridine, particulièrement de préférence qui contiennent des dérivés substitués par 2,2,6,6-tétra-alkyl, et tout particulièrement de préférence qui contiennent des dérivés substitués par 2,2,6,6-tétra-alkyl-4-amino ou qui contiennent des dérivés substitués par 2,2,6,6-tétra-alkyl-4-hydroxy, ou qui contiennent en particulier des dérivés de bipyridyle, particulièrement de préférence qui contiennent des dérivés de 4,4'-bipyridyle, et tout particulièrement de préférence des dérivés de 4,4'-bipyridyle qui sont substitués par alkyl dans la position 4,4', ou des quinones qui constituent des produits d'oxydation de phénols, en particulier de l'hydroquinone, de l'anthraquinone ou du 1,4-dihydroxynaphtalène.

13. Elément de batterie à flux redox selon la revendication 12, **caractérisé en ce qu'**il contient comme composants à activité redox des polymères à squelette polyméthacrylate ou à squelette polyacrylate avec des groupes formant des radicaux nitroxyde qui y sont liés de manière covalente, en particulier des polyméthacrylates ou des polyacrylates avec des pipéridines substituées par 2,2,6,6-tétra-alkyl qui sont liées aux groupes carboxyles du polyméthacrylate ou du polyacrylate par un atome d'oxygène 4 et tout particulièrement de préférence du poly(2,2,6,6-tétraméthylpipéridinyloxy-méthacrylate-co-poly(éthylène glycol)-méthyléther-méthacrylate) ou qu'il contient comme composants à activité redox des polymères à squelette polyalkylène glycol avec des résidus de viologène copolymérisés, en particulier des polyéthylènes glycols avec des résidus de 4,4'-bipyridyle copolymérisés, qui sont liés à des atomes C de l'éthylène glycol par les atomes d'azote du pyridyle, et tout particulièrement de préférence du poly(4,4'-bipyridine-co-poly(éthylène glycol)).

14. Elément de batterie à flux redox selon la revendication 12, **caractérisé en ce qu'**il contient comme composants à activité redox des polymères qui présentent un squelette de polymère sélectionné dans le groupe constitué des polyméthacrylates, polyacrylates, polystyrènes, polyalkylènes glycols ou éthers polyvinyliques et, liés à celui-ci de manière covalente, des composants à activité redox sélectionnés dans le groupe constitué des groupes formant des radicaux nitroxyde, des radicaux verdazyl ou des radicaux nitronyl-nitroxyde, des viologènes ou des quinones.

15. Elément de batterie à flux redox selon la revendication 1, **caractérisé en ce que** l'on utilise comme composants à activité redox des polymères qui sont présents sous la forme de polymères linaires ou de polymères ramifiés, en particulier sous la forme de polymères en peigne ou en étoile, de dendrimères, de polymères en échelle, de polymères annulaires, de polycaténanes ou de polyrotaxanes.

16. Elément de batterie à flux redox selon la revendication 1, **caractérisé en ce que** la viscosité de l'électrolyte utilisé se situe dans la plage comprise entre 1 mPa.s et 10⁶ mPa.s, particulièrement de préférence entre 10² et 10⁴ mPa.s (mesurée à 25 °C avec le viscosimètre rotatif, plaque-plaque).

17. Elément de batterie à flux redox selon la revendication 1, **caractérisé en ce que** le solvant électrolytique contient d'autres additifs qui sont sélectionnés dans le groupe constitué des agents tensio-actifs, des modificateurs de viscosité, des pesticides, des tampons, des stabilisateurs, des catalyseurs, des additifs conducteurs, des agents antigel et/ou des stabilisateurs de température.

18. Utilisation de l'élément de batterie à flux redox selon la revendication 1 pour le stockage d'énergie électrique pour des applications mobiles et stationnaires.

19. Utilisation selon la revendication 18, **caractérisée en ce que** l'élément de batterie à flux redox est utilisé dans le domaine de l'électromobilité, en particulier comme accumulateur dans les véhicules terrestres, aériens et nautiques, ou que l'élément de batterie à flux redox est utilisé comme accumulateur stationnaire pour l'alimentation électrique de secours, la compensation des charges de pointe ainsi que pour le stockage intermédiaire d'énergie électrique provenant de sources d'énergie renouvelables, en particulier dans le secteur du photovoltaïque et de l'éolien.
